# EUROPEAN PATENT APPLICATION

(11) **EP 1 510 923 A2**
(43) Date of publication of application: **02.03.2005**
(21) Application number: 04015217.5
(22) Date of filing: 29.06.2004
(51) Int. Cl.: G06F 11/34

(54) **Microcomputer resource utilization estimation program, microcomputer resource utilization estimation apparatus, and program development method**

(30) Priority: 29.08.2003 JP 2003305950
(71) Applicant: Denso Corporation, Kariya-city, Aichi-pref., 448-8661 (JP)
(72) Inventor: Miyamoto, Seiji, Kariya-city Aichi-pref., 448-8661 (JP)
(74) Representative: Leson, Thomas Johannes Alois, Dipl.-Ing.

(57) **Abstract**

A development process of an engine ECU program is comprised of a system design stage (52) for a model creation, a software development stage (53) for a source code and object code generation based on the model, and a system testing/matching stage (54) for testing a relevant object code on an engine ECU of an actual vehicle. In this development process, a microcomputer resource utilization estimation program calculates and displays the total amount of microcomputer resource utilization by an object code generated from the relevant model, based on the estimated amount of microcomputer resource utilization of each component block in the relevant model.

## Description

The present invention relates to a microcomputer resource utilization estimation program, a microcomputer resource utilization estimation device, and a program development method, which are used in a model-based program development.

Conventionally, a model-based development is used, for example, as a program (software) development method for a vehicle engine control system, for example EP 1111483 A1 (JP-A-2000-20291). FIG. 10 shows such a model-based development process in a schematic diagram.

Functionality required for the program as a finished product is, in the first place, specified by a developer, based on the capacity of an engine ECU, a development concept, and the like. This corresponds to a requirement specification 51. Then, the developer creates a model 50 as specifications to realize the specified functionality. The model 50 is a representation of a created program based on model language specifications that is defined for the purpose of readiness of description and higher humane readability compared to a source code. Simulink (a registered trademark) model created by Simulink, for example, is a typical one.

Simulation is, in the next step, executed based on the created model. 'Simulation' means an execution of a program represented by the model 50 in a virtual space such as a personal computer without generating a source code and an object code from the created model. In most cases, suitably created dummy data are used as input data for the relevant model. When a specification error of the created model and the like is revealed by an execution of simulation, the model is corrected by the developer.

A stage that includes model creation, simulation execution, and model correction is called as a system design stage 52.

The model created and corrected in the above way is converted into a source code in conformity with grammatical rules of a programming language such as C++ following the system design stage 52. When Simulink model as an input is fed, for example, to a software called Real Time Workshop (registered trademark: abbreviated as RTW) that runs on Matlab (registered trademark), the RTW generates a source code corresponding to the relevant Simulink model.

Then, the source code created in this manner is compiled and linked by softwares such as a compiler, a linker, and the like, and converted into an object code. From the created object code, the amount of ROM occupied by the program when this program is implemented to an engine ECU, that is, a ROM utilization amount, and the amount of RAM occupied by an executable program when this program is implemented, that is, a RAM utilization amount, are specified.

Also, this object code is test-executed provisionally in a virtual space such as a personal computer. This test is noted as a simulation by software. This object code is likewise implemented and test-executed on an engine ECU not yet mounted on a vehicle. This test is noted as a bench for software. This kind of object code test-execution can identify the CPU processing load (CPU occupation rate and the like) .

The above stage of process that includes conversion of a model into a source code, compilation, linkage, simulation by software, and bench for software is called as a software development stage 53.

The object code created in the above manner is, following the software development stage 53, implemented and tested on an engine ECU that is either mounted on a test vehicle or on a hardware that simulates vehicle functionality. This stage of testing process is called as a system testing/matching stage 54.

Then, a final evaluation of the program is done by the relevant engine ECU mounted and tested on a vehicle that is actually run on a test track or in the similar way.

In the model-based development process described above, distinction is recognized in the following points compared to the pre-model-based development. That is, the source code can be generated automatically from the model specifications created in the system design stage 52 instead of manually coding in the software development stage 53, and simulation of the model created in the system design stage 52 can be executed without generating the source code and the object code.

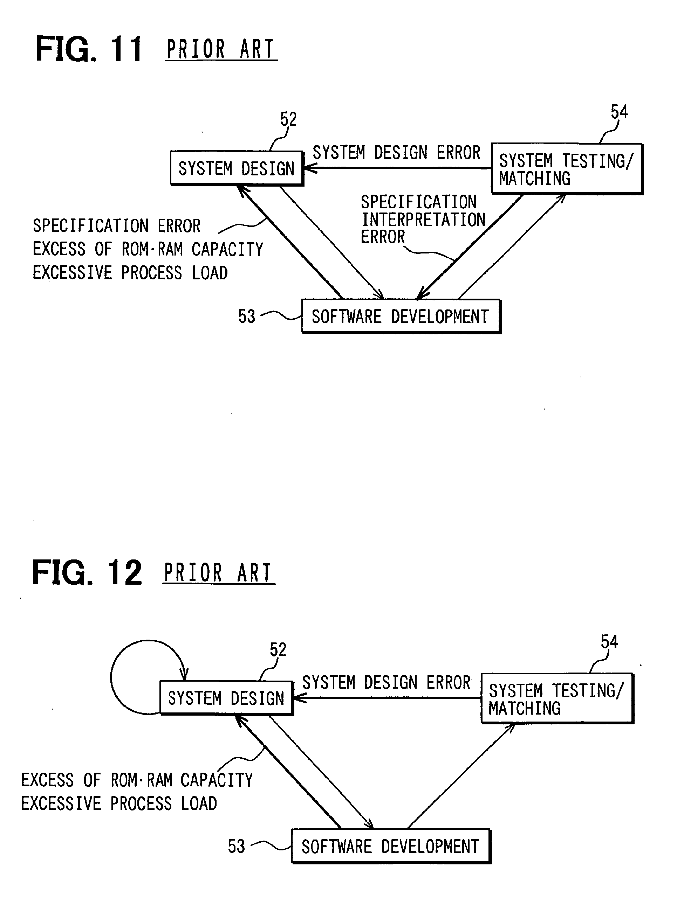

FIG. 11 shows a return path in the development process before model-based development is used. Before model-based development is used, program specifications are determined in the system design stage 52, the source code is manually prepared in the software development stage 53 based on the specification, the object code is prepared by compiling and linking the source code, and the object code is tested. Then, in the system testing/matching stage 54, the object code is implemented to an actual vehicle or the like.

When a ROM utilization amount, a RAM utilization amount, or a CPU processing load, identified either in the object code generation step or the test execution step, exceeds a maximum value of the capacity of an engine ECU in the software development stage 53, the development process returns to system design stage 52 and the specifications are re-considered.

In a vehicle engine control system, availability of suitable microcomputer is restricted by a factor such as production cost and the like. As a result, a microcomputer resource utilization amount is strictly limited in terms of ROM/RAM capacity and CPU processing load. Also, the development process returns to the system design stage 52 when specification's defect such as simple typos or mistakes of expression are found in the specification document in the software development stage 53.

The development process returns to the software development stage 53 when specification interpretation error is revealed at source code generation process in system testing/matching stage 54.

The development process returns to and is restarted from the system design stage 52, when the system specification itself is revealed to be in error in the system testing/matching stage 54.

FIG. 12 shows a return path in the model-based development process. Contrary to the case in FIG. 11, the model-based development automates the source code generation in the software development stage 53. There is no possibility of interpretation error of the model as specification. Consequently, returning caused by interpretation of specification from the system testing/matching stage 54 to the software development stage 53 is prevented.

Further, simulation of a model created in the system design stage 52 can be executed in the same stage, and specification defect can be detected in the same system design stage 52. That is, there is no returning from the software development stage 53 to the system design stage 52 because of a specification defect. Specifically, a repetitive process of "Model-creation to simulation to model-correction" spiral can create a more complete model, and returning from a later stage of the system development process (model correction) can accordingly be decreased.

In the above model-based development method, a microcomputer resource utilization amount, such as a ROM utilization amount, a RAM utilization amount and a CPU processing load, cannot be identified in the system design stage 52. Therefore, there still exists returning of the development processing caused by an excess of a microcomputer resource utilization limit. That is, returning from the software development stage 53 where the source code, the object code and the like are generated to system design stage 52 is not eliminated.

It is therefore an object of the present invention to provide a method of model-based development, wherein a microcomputer resource utilization amount can be estimated in the stage before a source code is generated from a model which is a representation of a program to be implemented to a microcomputer.

According to the present invention, a microcomputer resource utilization estimation program in a model-based development is constructed to operate a computer for retrieving a model from a memory medium and for calculating the estimated amount of microcomputer resource utilization of the model based on the microcomputer resource utilization amount of a component of the model stored in the memory medium.

In the model-based development, the estimated amount of microcomputer resource utilization can be calculated from the component in a model, and therefore the estimated amount of microcomputer resource utilization by the program represented by the relevant model and being implemented in an engine ECU can be calculated in a stage before a source code is generated from the model.

Further, a user can finally verify the estimated amount of microcomputer resource utilization. For example, the microcomputer resource utilization estimation program may operate a computer as a display control device to display the estimated amount of microcomputer resource utilization on a display device. The estimation program may operate a computer as a memory control device to control a memory to store the estimated amount of microcomputer resource utilization by the model in the memory medium.

Preferably, an estimated amount of microcomputer resource utilization of a post-change model is calculated based on the microcomputer resource utilization amount of a pre-change model stored in the memory medium and the estimated amount of microcomputer resource utilization of the component of the relevant changed portion of the post-change model.

Accordingly, the estimated amount of microcomputer resource utilization of the post-change model can be calculated based on the microcomputer resource utilization amount of the pre-change model. As a result, the estimation is made more accurately compared to the one not based on a microcomputer resource utilization amount of a pre-change model.

More preferably, the estimated amount of microcomputer resource utilization of a changing portion in the pre-change model is calculated based on the estimated amount of microcomputer resource utilization of a component of the relevant changing portion stored in the memory medium. The estimated amount of microcomputer resource utilization of the changing portion is subtracted from the microcomputer resource utilization amount of the pre-change model stored in the memory medium. The estimated amount of microcomputer resource utilization of the changed portion in the post-change model is calculated based on the estimated amount of microcomputer resource utilization of the component of the relevant changed portion in the post-change model stored in the memory medium. The estimated amount of microcomputer resource utilization derived from the changed portion calculation is added to the amount of subtraction result to yield the estimated amount of microcomputer resource utilization of the changed model.

Preferably, a program development method includes a first conversion process that converts a model of a microcomputer implementation program to a source code, and a second conversion process that converts the source code yielded from the first conversion to an object code. The method further includes a calculation process prior to model-to-source code conversion that calculates an estimated amount of microcomputer resource utilization of the created model.

The above and other objects, features and advantages of the present invention will become more apparent from the following detailed description made with reference to the accompanying drawings. In the drawings:
FIG. 1 shows a schematic diagram of a model-based program development method of a program implemented in an engine ECU according to an embodiment of the present invention;
FIG. 2 shows a structure of a personal computer 1 of the present embodiment;
FIG. 3 shows a schematic diagram of a simulator;
FIG. 4 shows a flow chart showing processing in a microcomputer resource utilization estimation program;
FIG. 5 shows a schematic diagram showing an example of a pre-change model and a post-change model;
FIG. 6 shows a schematic diagram showing a structure of basic blocks in an temperature-compensated correction block;
FIG. 7 shows a table showing an example of an estimation model table;
FIG. 8 shows a diagram of information displayed on a display as an example;
FIG. 9 shows a schematic diagram of a returning path of a model-based program development method in the present embodiment;
FIG. 10 shows a schematic diagram of a model-based program development method for a program implemented in an engine ECU according to a conventional method;
FIG. 11 shows a returning path in a process before model-based program development method is used; and
FIG. 12 shows a returning path in a process of the conventional-model based program development method.

Referring first to FIG. in requirement specification stage 51, a program developer and the like specify a function of a program as a finished product based on a capacity of an engine ECU, a development concept and the like. Then, in a system design stage 52, the developer creates a model 50 as specifications to realize the specified function and executes a simulation based on the created model 50.

In a software development stage 53, the model 50 created and corrected in the above way is converted to a source code. This corresponds to a process that converts a model created for implementing a program to a microcomputer into a source code. Also, in the software development stage 53, this source code is converted through compilation and linkage into an object code. This corresponds to a process that converts the source code into an object code.

Further in the software development stage 53, an amount of ROM occupied by the program being implemented to the relevant engine ECU when the program is implemented in an engine ECU, that is, a ROM utilization amount, and an amount of RAM occupied by the programs being implemented to the engine ECU and executed, that is, a RAM utilization amount, are identified based on the created object code.

Furthermore in the software development stage 53, this object code is test-executed provisionally in a virtual space such as a personal computer and the like (simulation by software), and test-executed on an engine ECU not mounted on a vehicle (bench for software). According to the test-execution of the object code in this manner, CPU processing load (CPU occupation rate and the like) of the relevant object code is identified.

In a system testing/matching stage 54, an object code generated in the above manner is test-executed when implemented to the engine ECU mounted on an actual vehicle or a hardware that simulates function of a vehicle.

In the system testing/matching stage 54, a final evaluation is executed as a final evaluation stage 55 in such a way that a vehicle which carries the relevant engine ECU is actually driven on a road or the like.

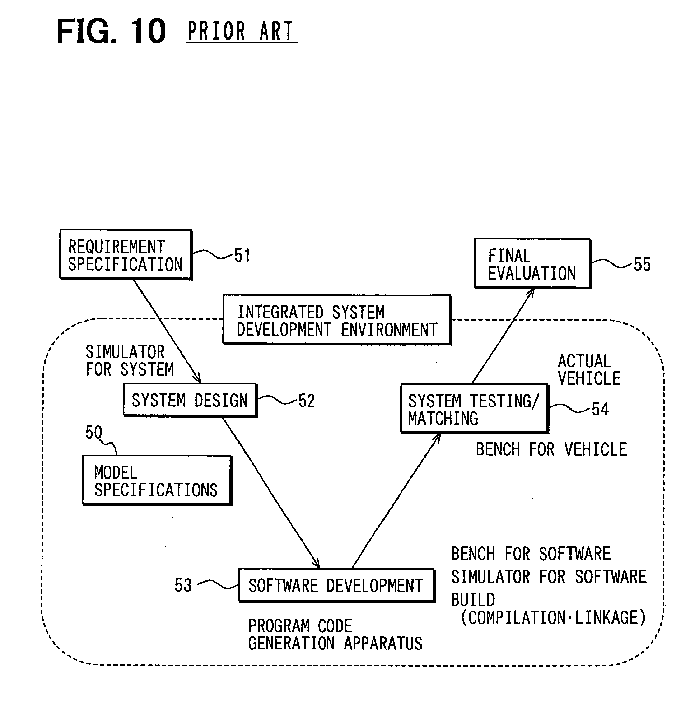

A detailed description of model-based program development process which is comprised of a series of the following stages, that is, the requirement specification 51 stage, the system design stage 52, the software development stage 53, the system testing/matching stage 54, and the final evaluation stage 55, are the same as the model-based program development process shown in FIG. 10 except for the following points.

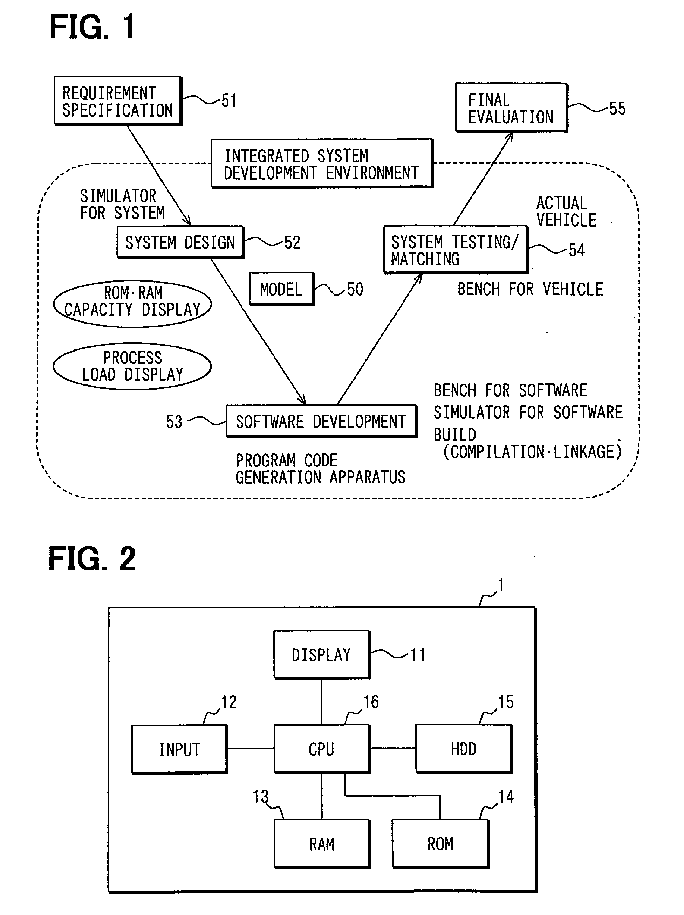

As shown in FIG. 2, a personal computer 1 is used in each stage of the model-based program development method shown in FIG. 1. This personal computer 1 is made up of a display 11, an input device 12, a RAM 13, a ROM 14, a HDD (hard disk drive) 15, a CPU 16 and the like.

The display 11 converts an image signal input from the CPU 16 to a visual image and displays it to a user. The input device 12 is comprised of a keyboard, a mouse and the like, and outputs a signal to the CPU 16 according to a user operation.

The RAM 13 is a volatile memory which is both readable and writable. The ROM 14 is a non-volatile memory which is read-only. The HDD 15 is also a readable and writable non-volatile memory. In the ROM 14 and the HDD 15, programs and the like that are to be retrieved and executed by the CPU 16 are stored in advance. The HDD 15 stores information on a table of an estimation model and a table of a model data and the like that will be described later in this document. The RAM 13 is used as a storage area to temporarily store the programs, when the CPU 16 executes the programs stored in the ROM 14 and the HDD 15.

The CPU 16, after being activated when the personal computer 1 is turned on, executes a boot program retrieved from the ROM 14. It also executes an operating system (OS) designated by the boot program and other programs retrieved from the HDD 15, and enters into boot processing. The CPU 16, thereafter until the power is turned off, executes various programs stored in the HDD 15 as processes on the relevant OS according to a signal from the input device 12, a schedule predetermined by the OS and the like. Also, in the boot processing and the processing run on the OS described above, the CPU 16 receives a signal input from the input device 12, outputs the image signal to the display 11, and controls reading and writing of data to the RAM 13 and the HDD 15 as needed.

Next, the operation of the CPU 16 according to the execution of a program is described as an operation of a relevant program itself.

Programs executed by the CPU 16 on the personal computer 1 varies from a model creation assist program in the system design stage 52 (model editor) to a program for simulation (simulator), a microcomputer resource utilization estimation program, a source code generation program in the ware development stage 53, a simulation program for a compiler/linker software (simulator for software) and the like. Each of these programs is activated in response to a certain operation of the user input device 12 on the above OS.

The model editor is a program that displays a model constructed from the user-specified blocks in a user-defined manner on the display 11, and stores the model in the HDD 15. Each of the created model has its own name specified either by a user or by an automated process, and stored in the HDD 15 with a given name when saved. The user input applied from the input device 12.

Also, the block is a function unit used to construct a model as an element, and a model is represented as a combination of the blocks. Combination, in this context, means a linkage of input-output relation between function units. A detailed example of a block is, for instance, an arithmetic operation block that operates upon input of two numerical data to yield a certain arithmetic calculation result, or a comparison block that compares two inputs to output a value based on a smaller-larger kind of comparison, or the like.

Further, a model is created by using the model editor in either of the following two ways, that is, modifying a model already stored in the HDD 15 or creating from scratch without a base model to be modified.

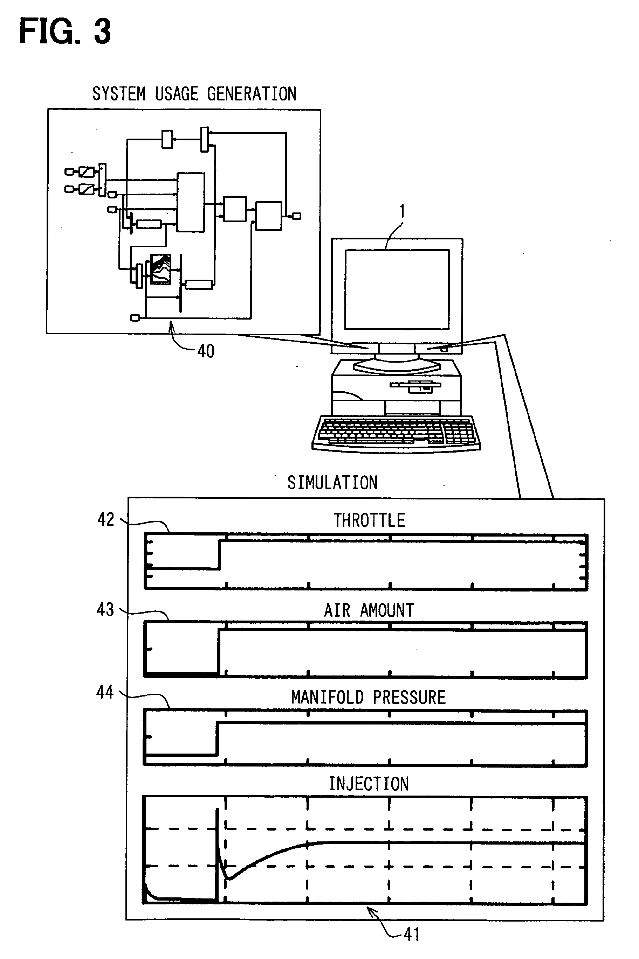

The simulator retrieves, by using the model editor, a model either displayed on the display 11 or stored in the HDD 15 and executes as it is in a virtual space of the personal computer 1. FIG. 3 shows a schematic diagram of a simulator operation. The simulator run on the CPU 16 of the personal computer 1, for example, retrieves and executes a fuel injection model 40 that is a representation of a fuel injection period control program based on the value of an opening degree of a throttle, air amount passing through a throttle, and an intake manifold pressure. Then, it displays a graph of chronological change of a basic fuel injection period 41 on the display 11 as an execution result. In this case, the chronologically ordered values of the following items, that is, an opening degree of a throttle 42, an amount of air passing through the throttle 43, and an intake manifold pressure 44, are taken from a user specified set of predetermined data or the like.

The source code generation program converts the model, created by the user with the model editor and either displayed on the display 11 or stored in the HDD 15, into a source code of C++ or the like, and saves the source code as the conversion result to the HDD 15.

A compiler and a linker convert the source code into a directly executable type of program, namely, an object code on a CPU of a microcomputer in the target engine ECU to which the program is implemented.

A ROM utilization amount means an amount of a memory area in a ROM occupied by an object code when a created model is converted through the system design stage 52, the software development stage 53, and the system testing/matching stage 54 into an object code and is stored in a ROM of a microcomputer on an engine ECU of a vehicle. The amount is represented by the size of an object code generated in the software development stage 53.

Further, when the object code is generated by the linker, a Map file is also generated in the memory area of the HDD 15. In this Map file, a RAM utilization amount of the simultaneously generated object code is recorded.

A RAM utilization amount means the size of a memory area allocated in the RAM for an object code when a created model is converted through the system design stage 52, the software development stage 53, and the system testing/matching stage 54 into an object code, and is stored in the ROM of a microcomputer on an engine ECU of a vehicle, and is then executed. Specifically, this RAM utilization amount means the sum of memory size used by the relevant object code and the size of variables. The amount is represented by the information on stack size and variable area size carried in the object code generated in the software development stage 53.

As described above, the ROM utilization amount and the RAM utilization amount of the relevant program are identified when the object code is generated. According to this embodiment, the linker saves the information on the ROM utilization amount and the RAM utilization amount with the name of the relevant model in the model information table on the HDD 15. The model information table is a data that contains a plural number of data set entry comprised of a name of a model, a ROM utilization amount of a model, and a RAM utilization amount of a model. Consequently, the model information table has the information on the microcomputer resource utilization amount of a pre-change model (unchanged from initial model).

A software simulation program is a program that executes a generated object code in a virtual space on the personal computer 1. Input data for an object code may be taken from a user specified set of data, same as the one used for a simulator.

A microcomputer resource utilization estimation program is a program that estimates the amount of microcomputer resource utilization of a model that is created by the model editor. The microcomputer resource utilization amount includes the ROM utilization amount, the RAM utilization amount and the like.

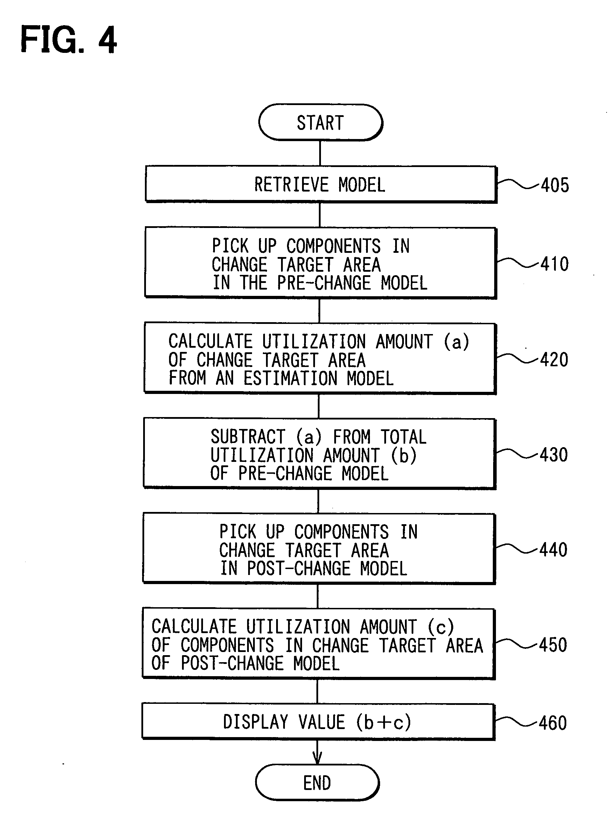

FIG. 4 shows a flow chart that explains processing of a microcomputer resource utilization estimation program. This program starts its processing execution when so instructed by a user with the input device 12, that is, when a model is specified and an activation of this microcomputer resource utilization estimation program is given. Besides, this program mainly handles with a model that is created by modification of a former model.

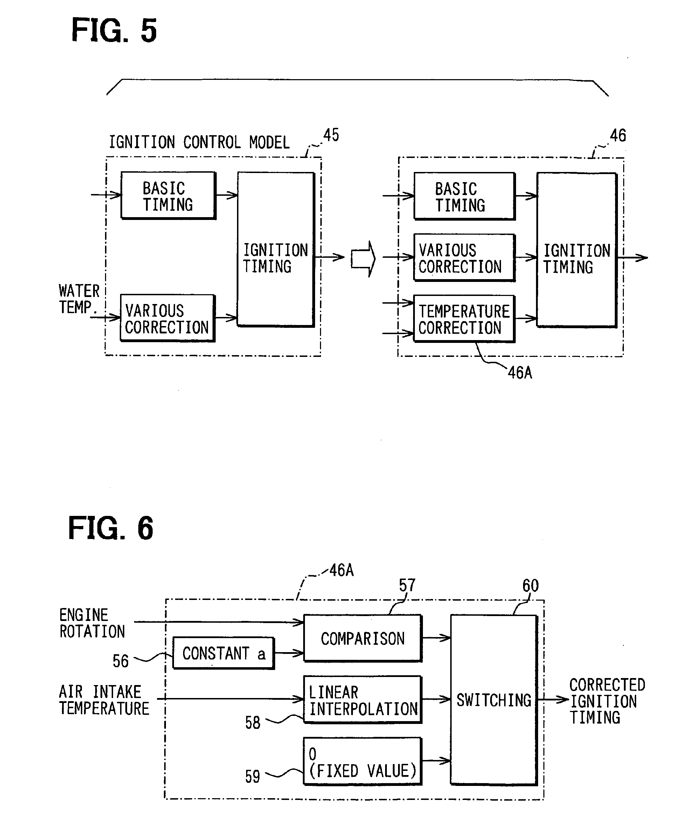

FIG. 5 shows an example of a pre-change model 45, and a post-change model 46. These models 45 and 46 are the representation of a program that determines engine ignition timings based on various inputs.

The pre-change model 45 has an basic ignition timing block that outputs an initial ignition timing value of ignition cylinder angle based on engine rotations, pressures and the like, and various correction blocks that output modified values of the basic ignition timing based on a water temperature and the like, and ignition timing block that determines and outputs an ignition timing based on two outputs from the basic ignition timing block and the various correction block.

On the contrary, a post-change model 46 has, in addition to the pre-change model 45, an air intake temperature-compensated correction block 46A. Also, the ignition timing block in the post-change model 46 differs from the one in the pre-change model 45 in terms of the ignition timing determining factor. The post-change model 46 determines its output of an ignition timing based on the three outputs, instead of two factors in the ignition timing block, that is, a basic ignition timing output, a various correction block output, and an air intake temperature correction block output.

Further, the temperature-compensated correction block 46A is comprised of a plural number of basic blocks. A basic block in this case means a block that implements a basic function such as a comparison, a linear interpolation, an arithmetic operation and the like. A block with a complex function is generally comprised of a combination of these basic blocks.

FIG. 6 shows a structure of basic blocks in the temperature-compensated correction block 46A. The temperature-compensated correction block 46A is comprised of a constant block 56, a comparison block 57, a linear interpolation block 58, a fixed value block 59, and a switching block 60.

The constant block 56 outputs constant 'a' that can be chosen by a user. The comparison block 57 takes an engine rotation value and the output from the constant block 56 as two inputs, and outputs 1 when the engine rotation value is greater than the output from the constant block 56, or outputs 0 when the output from the constant block 56 is greater than the engine rotation value. The linear interpolation block 58 outputs a correction value based on an air intake temperature input.

The correction value is calculated by using a linear interpolation method based on a correction table that is either stored on the HDD 15 or transferred from the HDD 15 onto the RAM 13. The fixed value block 59 outputs a fixed value of 0 (zero). The switching block 60 outputs the input value from the linear interpolation block 58 when the input value from the comparison block is 1, and outputs the input value from the fixed value block 59 when the input value from the comparison block is 0.

As a result, the temperature-compensated correction block 46A outputs a correction value to the ignition timing block based on an air intake temperature when the engine rotation value is greater than constant 'a', and outputs a value of 0 (zero) as a signal of no correction required when the engine rotation value is smaller than constant 'a'.

In step 405 shown in FIG. 4, a specified model is retrieved. Specifically, the model created by the model editor and stored in the RAM 13 or the HDD 15 is copied to a certain area of the RAM 13 based on a user instruction.

Next in step 410, a component in a change target area of the relevant model is picked up in the pre-change model. The identification of the pre-change model is done in a way that a change history with the name same as a specified model is retrieved from the HDD 15, and the latest model in the retrieved change history is taken as the pre-change model.

The change target area in a pre-change model means a block on a certain condition. The conditions are either the block is in the pre-change model and has the same name with the changed contents in the post-change model, or the block that exists in the pre-change model but does not exists in the post-change model. Also, the name of a block means a peculiar name to each block, and blocks of the same kind (arithmetic operations, for example) have different names respectively.

In the pre-change model 45 and the post-change model 46 in FIG. 5, taken as an example, a change target area in the pre-change model means an ignition timing block.

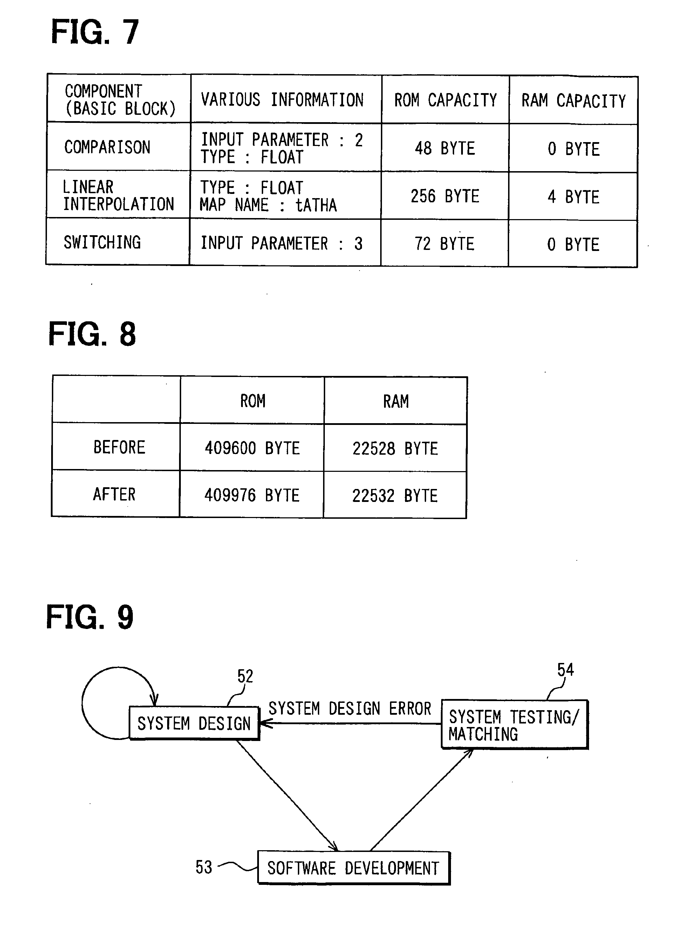

Next in step 420, estimated amounts (a) of the ROM utilization and the RAM utilization of the components in the relevant change target area are calculated from the estimation model. The estimation model means a table that contains a plural number of information entry comprised of a basic block, an estimated amount of ROM utilization of the basic block, an estimated amount of RAM utilization of the basic block and the like, and the table is stored in the HDD 15 in advance. FIG. 7 shows an example of a table of the estimation model.

A table of the estimation model is a data that contains a number of information set entry comprised of a type of a basic block, a various information on input/output variables and the like regarding the relevant basic block type, a ROM utilization estimation amount of the basic block, and a RAM utilization estimation amount of the basic block. Each line except for the top line in FIG. 7 corresponds to an entry, and each row in a line corresponds to an element in an information set of respective entries.

For example, a fourth entry in FIG. 7 is a switching block entry and, the information contained in this entry indicates that the switching block has three input parameters and estimated amounts of ROM utilization and RAM utilization are 72 bytes and 0 byte, respectively. Also, the information contained in the estimation model table is set in advance.

In step 420, with reference to the estimation model table, the estimated amounts of ROM utilization and RAM utilization of each component picked up in step 410 are identified, and then the sum 'a' of each of the relevant components (two different values of utilization estimation amount for the ROM and the RAM in one place) is regarded as the ROM and the RAM utilization estimation amount of the relevant change target area.

In the pre-change model 45 and the post-change model 46 shown in FIG. 5 taken as an example, the estimated amounts of ROM and RAM utilization for each of the basic blocks contained in the ignition timing model are identified from the estimation model table and the sum of the two value is regarded as the sum 'a'.

Next in step 430, a subtraction of the sum 'a' derived in step 420 from the total amount of ROM utilization and RAM utilization of the relevant pre-change model respectively are regarded as a subtracted value b (two values contained). The total amount of ROM utilization and RAM utilization are identified by retrieving the model information table.

In the pre-change model 45 and the post-change model 46 shown in FIG. 5 taken as an example, a total amount of ROM utilization and RAM utilization of the pre-change model 45 in the HDD 15 are retrieved and used for this process.

Next in step 440, the component of the change target area in the post-change model is picked up. The change target area in the post-change model 46 is, either a block in the post-change model 46 that has a changed content of a block with the name same as the one in the pre-change model 45, or a block that does not have a corresponding one in the pre-change model 45.

In the pre-change model 45 and the post-change model 46 shown in FIG. 5 taken as an example, the change target area in the pre-change model 45 includes the ignition timing block and the temperature-compensated correction block 46A.

Next in step 450, the ROM utilization amount and the RAM utilization amount occupied by the components in the change target area of the post-change model 46 picked up in step 440 are calculated based on the estimation model. Specifically, with reference to the estimation model table, the estimated amounts of ROM and RAM utilization are identified on each component picked up in step 440, and then the sum 'c' of the relevant components (two different values of utilization estimation amount for the ROM and the RAM in one place) is regarded as the estimated amounts of ROM and RAM utilization in the relevant change target area.

In the pre-change model 45 and the post-change model 46 shown in FIG. 5 taken as an example, the estimated amounts of ROM and RAM utilization by each of the basic blocks contained in both of the ignition timing model and the air intake temperature-compensated correction model are identified in the estimation model table and the sum of the two values is regarded as the sum 'c'.

Next in step 460, the sum 'c' is added to the subtracted value b calculated in step 430, and the sum of 'b + c' and the total utilization amount 'a + b' in the pre-change model 45 is displayed on the display 11. FIG. 8 shows an example of the information displayed on the display 11 in step 460.

The value in the second row on the second line in the table shown in FIG. 8 means the ROM utilization amount of pre-change model 45, and the value in the second row on the third line means the ROM utilization amount of the post-change model 46. The value in the third row on the second line means the RAM utilization amount of the pre-change model 45, and the value in the third row on the third line means the RAM utilization amount of the post-change model 46. Step 460 concludes this estimation process.

The above processing of the microcomputer resource utilization estimation program outputs the sum 'b + c' on the display 11, and that means [a total utilization amount of the pre-change model - (minus) the utilization estimation amount of the change target area in the pre-change model + the utilization estimation amount (c) by the change target area in the post-change model]. Namely, the sum (b + c) is a total utilization estimation amount in the post-change model.

Besides, the model created from scratch does not have a pre-change model. In this case, there is no change target area in the pre-change model in step 410 - 430, and the change target area in the post-change model in step 440 and 450 equal to the entire model created from scratch.

A return path in the above model-based program development method is shown in FIG. 9. In the model-based development method used in the embodiment of the present embodiment, the estimated amount of microcomputer resource utilization of the model created in system design stage 52 can be calculated by executing the microcomputer resource utilization estimation program before generating a source code from a model, that is, before the software development stage 53. As a result, there is no risk of returning from the software development stage 53 to the system design stage 52 to correct a resource utilization problem, as is the case shown in FIG. 12. FIG. 12 shows a case that a microcomputer resource utilization problem such as a ROM capacity shortage and a RAM capacity shortage is revealed in the software development stage 53. Therefore the development process is returned to the system design stage 52.

According to this method, in the model-based development, because the estimated amount of microcomputer resource utilization of a model can be calculated from the basic component of the model, the estimated amount of microcomputer resource utilization by the program implemented in the engine ECU represented by the relevant model can be calculated in a stage before the source code is generated from the model. Further, because the estimated amount of microcomputer resource utilization of the post-change model is calculated based on the microcomputer resource utilization amount of the pre-change model, the estimation is be more accurate.

Also, regarding the microcomputer resource utilization estimation program in the above embodiment, only a ROM utilization amount and RAM utilization amount are estimated and displayed among other microcomputer resource utilization amounts, but the estimation is not necessarily limited to the ROM and RAM utilization amount, that is, a CPU processing load may also be estimated and displayed by using the program.

The CPU processing load means a ratio of processing time taken by the object code execution against the whole CPU processing time, that is, CPU occupation rate. In such a case, for example, where a created model is converted through the system design stage 52, the software development stage 53, and the system testing/matching stage 54 into the object code and then is stored and executed in the ROM of the microcomputer on the engine ECU of a vehicle. The CPU process in the engine ECU is usually repeated in a synchronized manner to an engine rotation cycle, the CUP occupation rate varies in correspondence to the engine rotation.

Specifically, because each entry in the estimation model table shown in FIG. 7 contains the information on each basic block's operation time (time required for the execution of the relevant block in a microcomputer on an engine ECU), the resource utilization estimation program may calculate the estimation of model CPU occupation rate on a predetermined engine rotation based on the each block's operation time.

Further, in system testing/matching stage 54, the actual CPU processing load is identified by executing the object code generated from the model. Therefore the microcomputer resource utilization estimation program can calculate and display the estimated amount of CPU processing load of the post-change model based on the CPU processing load of the pre-change model and the CPU processing load of the components in the relevant change target area in the post-change model both stored in the HDD 15, when, for example, the information on the CPU processing load is input to the model information table in the HDD 15 with the input device 12 by a user.

The CPU processing load to be displayed on the display 11 may be a CPU occupation rate derived from the above model on a predetermined engine rotation value. However, the engine rotation value that triggers a CPU reset in an engine ECU (CPU reset rotation value) may be calculated as a CPU processing load and displayed when a program of the relevant model is executed instead.

FIG. 7 shows the estimation model table that contains entries representing microcomputer resource utilization amount such as a RAM utilization amount, a ROM utilization amount and the like in a form of numerical values, but the entries may also be equations. For example, the arithmetic operation block may vary the number of input data and arithmetic operation contents based on a user's setting. In this case, the estimated amount of microcomputer resource utilization of an arithmetic operation block may be represented by a linear function of the number of multiplication, division, addition, and subtraction executed in the arithmetic operation block.

Further, in the present embodiment, though a program used in an engine ECU is a subject of the microcomputer resource utilization estimation program, a program other than the one for an engine ECU's microcomputer may also be a subject of this resource utilization estimation program.

A development process of an engine ECU program is comprised of a system design stage (52) for a model creation, a software development stage (53) for a source code and object code generation based on the model, and a system testing/matching stage (54) for testing a relevant object code on an engine ECU of an actual vehicle. In this development process, a microcomputer resource utilization estimation program calculates and displays the total amount of microcomputer resource utilization by an object code generated from the relevant model, based on the estimated amount of microcomputer resource utilization of each component block in the relevant model.

## Claims

1. A microcomputer resource utilization estimation program for operating a computer (16) as:
a retrieval means (405) for retrieving a model from a memory medium (13, 15); and
a calculation means (410-460) for calculating an estimated amount of microcomputer resource utilization of the model retrieved by the retrieval means based on the estimated amount of microcomputer resource utilization of a component in a model stored in the memory medium (13, 15).

2. The microcomputer resource utilization estimation program according to claim 1, wherein:
the calculation means (410-460) calculates the estimated amount of microcomputer resource utilization of a post-change model (46) retrieved by the retrieval means based on a microcomputer resource utilization amount of a pre-change model (45) stored in the memory medium and the estimated amount of the microcomputer resource utilization by the component of a relevant changed portion of the post-change model stored in the memory medium.

3. The microcomputer resource utilization estimation program according to claim 2, wherein the calculation means (410-460) includes:
a change portion calculation means (410, 420) that calculates an estimated amount of microcomputer resource utilization of a change portion in the pre-change model based on an estimated amount of microcomputer resource utilization of a component of the relevant change portion stored in the memory medium;
a subtraction means (430) that subtracts the estimated amount of microcomputer resource utilization of the relevant change portion calculated by the change portion calculation means from a microcomputer resource utilization amount of the pre-change model stored in the memory medium;
a changed portion calculation means (440, 450) that calculates the estimated amount of microcomputer resource utilization of the relevant changed portion based on the estimated amount of microcomputer resource utilization of a component of the relevant changed portion of the post-change model stored in the memory medium; and
an addition means (460) that adds the estimated amount of microcomputer resource utilization derived from the changed portion calculation means to a value of subtraction result derived from the subtraction means to yield an estimated amount of microcomputer resource utilization of the post-change model.

4. A microcomputer resource utilization estimation apparatus comprising:
a memory medium (13, 15) that stores a model and an estimated amount of microcomputer resource utilization of a component of the model;
a retrieval means (405) that retrieves the model from the memory medium; and
a calculation means (410-460) that calculates an estimated amount of microcomputer resource utilization of the model specified by an input means based on the estimated amount of microcomputer resource utilization of the component in the model stored in the memory medium.

5. A program development method comprising the steps of:
converting (53) a model that is created and stored in a memory medium to represent a program to be implemented to a microcomputer into a source code;
converting (53) the source code generated by the conversion process into an object code; and
calculating (405-460) an estimated amount of microcomputer resource utilization of the model prior to converting the model to the source code.

6. The program development method according to claim 5, wherein:
the step of calculating (405-460) calculates the estimated amount based on an estimated amount of microcomputer resource utilization of a component of the model stored in the memory medium.
